# EUROPEAN PATENT APPLICATION

(11) **EP 4 387 027 A1**
(43) Date of publication of application: **19.06.2024**
(21) Application number: 22213193.0
(22) Date of filing: 13.12.2022
(51) Int. Cl.: H02J 1/10, H02J 1/14, H02J 7/34

(54) **POWER MANAGEMENT OF RESOURCES**

(71) Applicant: Collins Aerospace Ireland, Limited, Cork (IE)
(72) Inventor: TORCHIO, Marcello, Cork (IE)
(74) Representative: Dehns

(57) **Abstract**

A power and energy management system, PEMS, architecture for managing power consumed by a plurality of power devices on a network, the architecture comprising: one or more local supervisors (11, 12, 13) each arranged to be connected in digital communication with one or more of the power devices (10) on the network; each local supervisor comprising: an input (CONTROL ERROR) to receive a control error signal indicative of a difference between the power consumption of the one or more devices and power available on the network for those devices; a watchdog module (120) configured to receive the control error signal and to determine from the control error signal whether there is a need for PEMS action on the network; a status monitor (130) configured to obtain information as to the operating status of the one or more power devices; a coordinator module (150) configured to define a coordination strategy for operating selected devices of the one or more devices based on the determination from the watchdog module and the information obtained by the status module; and a control action module (160) arranged to provide a set point to selected devices of the one or more devices to operate according to the coordination strategy determined by the coordinator module.

## Description

### TECHNICAL FIELD

The present disclosure is concerned with the management of power or energy between a number of power resources e.g. a number of power devices on an aircraft.

### BACKGROUND

There are many fields in which a number of electrical or power devices are powered by a power grid or common supply and in some circumstances the amount of power/energy consumed by individual devices needs to be adjusted or managed to deal with varying demands on the grid/supply. In the following, power is specifically stated, but it should be noted that this term can be used interchangeably with energy. In cases of overload, or power failure, for example, the amount of electricity consumed by some or all of the loads may need to be reduced. At low demand times, on the other hand, generators may operate to return power to the system. Systems, known as Power and Energy Management Systems (PEMSs) are known to appropriately allocate available power between devices. One field where power and energy management is becoming increasingly important is in the aircraft industry. The industry is moving towards More Electric (or All Electric) Aircraft (MEA/AEA) to reduce the reliance on large, heavy mechanical and hydraulic system, this leading to an overall reduction in fuel consumption by aircraft. More and more aircraft systems and devices on-board aircraft are driven by electric power. Typically, an aircraft will have a large number of diverse power devices such as coffee machines, ovens, lighting, entertainment systems, announcement systems, as well as power devices used in the cockpit for flight control. With advances in MEA/AEA, batteries or fuel cells etc. may be provided to power the aircraft engines, and other systems that use fuel and/or mechanical or hydraulic control, such as environmental control systems, actuators for brakes, flight control systems, etc. may also be electrically powered. Some of these devices are safety critical devices, and others are less so. Many of the devices are so-called 'flexible' power devices in that they can modify their power consumption (e.g. between on and off or consuming different amounts of power) in response to a request from an external device or system such as a PEMS. The flexibility in power consumption can be used to advantage in the case that the demands on the grid/power supply fluctuate. The PEMS can then ensure, for example, that in the case of overload of the grid or generator failure, power continues to be supplied to the most safety critical devices whilst power supply to other devices can be reduced according to the devices in question.

PEMSs may be deployed as centralised components or as distributed architectures, and will interact with the on-board flexible power devices. PEMSs generally operate with the aim of enforcing a general objective at the power grid level - e.g. to maintain the overall power consumption at the aircraft level within specific bounds to avoid the emergence of critical operating conditions.

With advances in the field of MEA/AEE, aircraft are now also being provided with energy generating and storage devices such as batteries, supercapacitors etc. PMESs are being designed to also drive such resources that can both provide power to drive loads and yield power to the grid, and actively monitor their status (e.g. state of charge, optimisation of charging cycles, etc.).

As networks in many fields, including on aircraft, are being designed to power a large a varied number of heterogenous power devices and generative and storage devices, and that such networks will vary according to applications and uses, there is a need for a generic PEMS that can be used regardless of the application and the design of the network and the power devices on the network.

### SUMMARY

According to the present disclosure, there is provided a power and energy management system, PEMS, architecture for managing power consumed by a plurality of power devices on a network, the architecture comprising: one or more local supervisors each arranged to be connected in digital communication with one or more of the power devices on the network; each local supervisor comprising: an input to receive a control error signal indicative of a difference between the power consumption of the one or more devices and power available on the network for those devices; a watchdog module configured to receive the control error signal and to determine from the control error signal whether there is a need for PEMS action on the network; a status monitor configured to obtain information as to the operating status of the one or more power devices; a coordinator module configured to define a coordination strategy for operating selected devices of the one or more devices based on the determination from the watchdog module and the information obtained by the status module; and a control action module arranged to provide a set point to selected devices of the one or more devices to operate according to the coordination strategy determined by the coordinator module.

### BRIEF DESCRIPTION

Examples according to the disclosure will now be described with reference to the drawings. It should be noted that these are examples only and variations may be possible within the scope of the claims. Specific examples will be described in relation to a power network on an aircraft but this is only one example, and the principles of the disclosure may also be used in other fields or environments.
Figure 1 shows an example of a PEMS system architecture according to the disclosure.
Figure 2 shows as example of a generic PEMS architecture according to the disclosure.

### DETAILED DESCRIPTION

The present disclosure provides a generic set of architectures that can be used in different networks to provide a scalable and replicable PEMS solution. By providing generic architectures, the PEMS solution can be easily and reliably incorporated into a wide range of networks needing power management.

The architecture of this disclosure will be described, with reference to the drawings, using the example of managing power or energy for devices inside an aircraft cabin. This is, however, just one example of an application for this architecture which can be used in a wide variety of applications where power or energy management of multiple devices is required. In the description, we refer to power management but the concept of the disclosure equally applies to energy management.

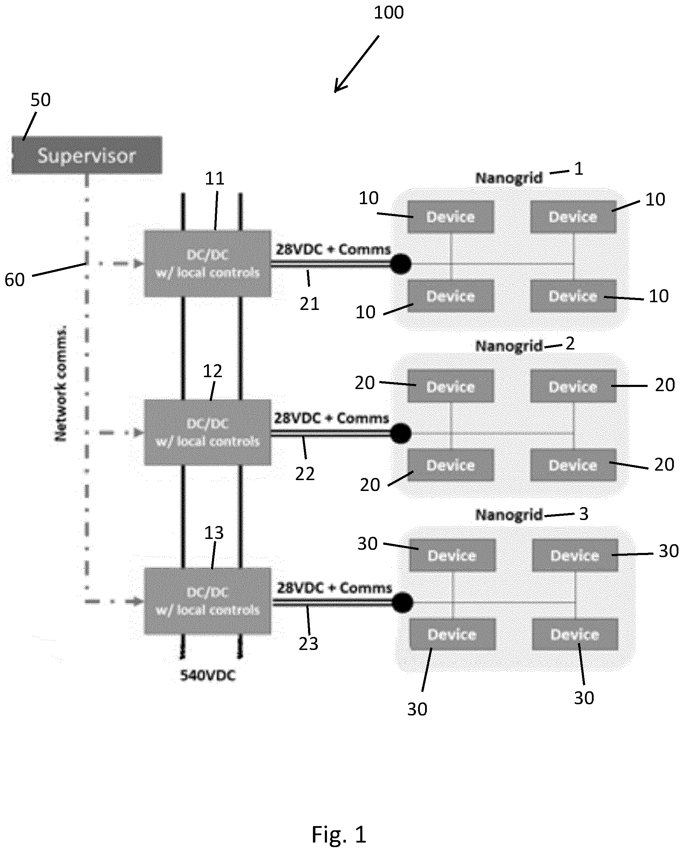

Figure 1 shows an example of the architecture of the disclosure, for managing power for a plurality of devices 10, 20, 30. In the example shown, the devices may be arranged in groups or nanogrids 1, 2, 3 each including several devices. The Figure shows nanogrids as groups of four devices, but this is purely by way of example and any number of devices can be grouped together. As an example, each group could include devices (lighting, entertainment devices etc.) in a same row of seats in an aircraft cabin, and the aggregate power consumption for the row may be monitored instead of or as well as power consumption by each device.

The PEMS includes a global supervisor 50 connected via network communication lines 60 to a plurality of distributed local supervisors 11, 12, 13 (also referred to as local controllers). The local supervisors 11, 12, 13 are responsible for monitoring, managing and controlling specific power devices or specific sets of power devices on the network. Here, each local supervisor 11, 12, 13 is associated with a respective nanogrid or group 1, 2, 3 of devices 10, 20, 30. In other examples, local supervisors may be associated with individual devices. The number of local supervisors and the devices the control will depend on the application.

The global supervisor 50 receives general information relating to use of the network, e.g. information from aircraft flight management systems, etc.

The global supervisor can communicate with the local supervisor(s) via dedicated communication channels 21, 22, 23 which can be wired or wireless. This communication is generally useful to align local controls to achieve global objectives (e.g. objectives for the entire network, for the entire aircraft, etc.)

The local supervisors 11, 12, 13 may, e.g. combine with DC/DC converters used to distribute power to different devices. The local supervisors 11, 12, 13 communicate digitally (using any known digital communication apparatus and method/protocol) with the device(s) under their control. This communication is typically bi-directional and allows a generic exchange of information between the supervisors and their device(s). For example, the devices or groups of devices can communicate information about their configuration/properties to the respective local supervisor, and the local supervisor can send e.g. control information (e.g. set points) to the devices.

By providing communication channels between the devices and the supervisors, the PEMS is made generic and the concept can be replicated over different power networks.

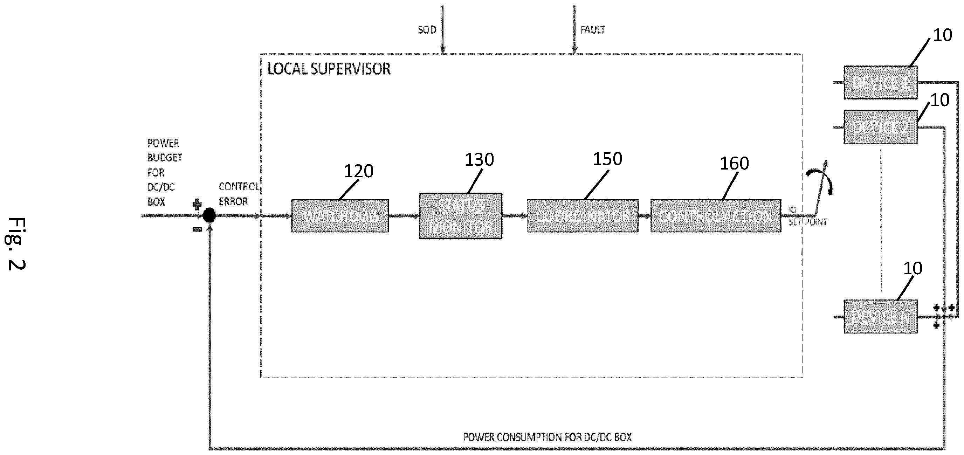

For each network, the generic architecture described above will be supplemented with suitable logic to deliver the PEMS action. Again, this will be incorporated in a generic manner as described with reference to Fig. 2.

The generic PEMS architecture will be provided in the local supervisors 11, 12, 13 and comprises a watchdog module 120, a status monitor 130, a coordinator 150 and a control action module 160.

An input to the PEMS watchdog module is a control error signal which is a signal indicative of the network having a condition that requires action from the PEMS. In one example, this is a difference between the power budget available for the device(s) under the control of the local supervisor and the actual consumption of the device(s). The available power budget can be provided locally and may vary over time based on stages of flight, etc. The difference may be due to e.g. an overload condition or a failure condition acting on the system, or some other condition requiring action by the PEMS. The measure of power consumption may be an aggregate for all of the multiple devices controlled by the local supervisor and/or may be a measure of the individual devices' power consumption.

The watchdog module 120 determines, based on the error signal, whether PEMS intervention is required or not.

The status monitor 130 determines, based on information provided from the devices 10, 20, 30, the status of each device e.g. whether the device is functional, faulty or other status. The status indicates whether or not each device can contribute to the PEMS intervention - i.e. whether or not the device is available to modulate power. Based on the status and the output of the watchdog module 120, the coordinator 150 chooses one or more devices to be used in the PEMS intervention - i.e. for modulating power. The control action module 160 then adjusts the power consumption, e.g. the set-point of the selected device(s). In addition to resolving power emergencies, the proposed architecture can also, if no such emergency has to be resolved, use power on the network to recharge storage devices on the network e.g. batteries. The coordinator can also provide a coordination strategy for such recharging depending on the determination made by the watchdog module.

Some or all of the watchdog module, status monitor, coordinator and control action module can be separate blocks or combined into a single block.

The generic architecture of the disclosure can be used for PEMS on a variety of platforms, relying on the assumption that there is digital communication between the devices used in the PEMS action. This allows the concept to be independent from the physical layout of the underlying power network. The concept is therefore replicable and scalable.

## Claims

1. A power and energy management system, PEMS, architecture for managing power consumed by a plurality of power devices on a network, the architecture comprising:
one or more local supervisors (11, 12, 13) each arranged to be connected in digital communication with one or more of the power devices (10) on the network; each local supervisor comprising:
an input (CONTROL ERROR) to receive a control error signal indicative of a difference between the power consumption of the one or more devices and power available on the network for those devices;
a watchdog module (120) configured to receive the control error signal and to determine from the control error signal whether there is a need for PEMS action on the network;
a status monitor (130) configured to obtain information as to the operating status of the one or more power devices;
a coordinator module (150) configured to define a coordination strategy for operating selected devices of the one or more devices based on the determination from the watchdog module and the information obtained by the status module; and
a control action module (160) arranged to provide a set point to selected devices of the one or more devices to operate according to the coordination strategy determined by the coordinator module.

2. The PEMS architecture of claim 1, wherein the plurality of devices on the network comprise one or more groups (1, 2, 3) of power devices, and wherein a respective local supervisor is arranged to be connected to each group.

3. The PEMS architecture of claim 1 or 2, wherein the watchdog module determines whether PEMS action is required based on detection of an overcharge condition on the network.

4. The PEMS architecture of any preceding claim, wherein the watchdog module determines whether PEMS action is required based on detection of a failure condition on the network.

5. The PEMS architecture of any preceding claim, wherein a determination is made as to whether any storage devices on the network can be recharged based on the determination by the watchdog module.

6. The PEMS architecture of any preceding claim, wherein the control action module sets the devices to operate at a set point based on the determination of the coordinator module.

7. The PEMS architecture of any preceding claim, comprising a plurality of said local supervisors each connected to one or more power devices.

8. The PEMS architecture of claim 7, wherein each local supervisor is connected to a group of power devices.

9. The PEMS architecture of any preceding claim, further comprising a global supervisor (50) arranged to communicate to the or all of the one or more local supervisors over the network.

10. The PEMS architecture of any preceding claim, being a PEMS on an aircraft power network.

11. The PEMS architecture of claim 10, wherein the power devices are power devices in a cabin of an aircraft.

12. The PEMS architecture of claim 11, wherein the power devices include power devices whose power consumption can be adjusted as well as switched on or off.

13. The PEMS architecture of claim 11, wherein the power devices include cabin lighting and/or cabin entertainment devices.

14. The PEMS architecture of claim 13, wherein the power devices are grouped according to cabin seat row and wherein each seat row group has a respective local supervisor.
